# EUROPÄISCHE PATENTSCHRIFT

(11) **EP 0 658 706 B1**
(45) Veröffentlichungstag und Bekanntmachung des Hinweises auf die Patenterteilung: **09.07.1997**
(21) Anmeldenummer: 94118531.6
(22) Anmeldetag: 25.11.1994
(51) Int. Cl.: F16H 47/04

(54) **Stufenloses hydrostatisches Leistungsverzweigungsgetriebe**
Continuously variable split-torque hydromechanical transmission
Transmission hydromécanique continue à division de puissance

(30) Priorität: 18.12.1993 DE 4343401
(43) Veröffentlichungstag der Anmeldung: 21.06.1995
(73) Patentinhaber: J.M. Voith GmbH, D-89522 Heidenheim (DE)
(72) Erfinder: Hayd, Peter, D-89520 Heidenheim (DE)
(74) Vertreter: Weitzel, Wolfgang, Dr.-Ing. Patentanwalt

(56) Entgegenhaltungen:
- EP-A- 0 411 371
- DE-U- 9 202 706
- FR-A- 2 373 000

## Beschreibung

Die Erfindung betrifft ein stufenloses hydrostatischmechanisches Leistungsverzweigungsgetriebe, im einzelnen mit den Merkmalen des Oberbegriffes aus Anspruch 1.

Das aus der DE 29 04 572 bekannte stufenlose hydrostatischmechanische Leistungsverzweigungsgetriebe, nachfolgend kurz SHL-Getriebe genannt, weist im Hydrostatikteil einseitig schwenkbare Hydroeinheiten auf. Zur Realisierung der systembedingten Drehzahlumkehrungen der einzelnen Hydroeinheiten in den einzelnen Fahrbereichen, im Bremsbetrieb und im Rückwärtsgang ist in den einzelnen Fahrbereichen jeweils ein Vertauschen der Durchströmungsrichtung der Hydroeinheiten erforderlich, welches mittels eines aufwendigen Steuerblockes realisiert wird. Der Nachteil im Einsatz eines derartigen Steuerblockes besteht vor allem in der problembehafteten Kanalführung, der geringen Gestaltfestigkeit und der begrenzten Möglichkeit einer Bestückung mit hydraulischen Steuerorganen sowie sehr hohen Kosten. Desweiteren werden die Außenabmessungen dieses Steuerblockes durch den maximalen Volumenstrom der Hydroeinheiten, den damit verbundenen Abmessungen der Einbauventile, der Kanalführung und der zulässigen Werkstoffbeanspruchung bestimmt, weshalb eine Integration in ein kompaktes Getriebe nicht möglich ist. Zudem wird das Getriebegewicht durch den Steuerblock erheblich erhöht.

Die Aufgabe der Erfindung besteht deshalb darin, ein SHL-Getriebe der eingangs genannten Art derart weiterzuentwickeln, daß die genannten Nachteile vermieden werden. Der steuer- und regelungstechnische Aufwand soll dabei minimiert werden.

Die erfindungsgemäße Lösung der Aufgabe wird durch die kennzeichnenden Merkmale des Anspruches 1 charakterisiert.

Vorteilhafte Ausgestaltungsmöglichkeiten sind in den Unteransprüchen wiedergegeben.

In einem Getriebe entsprechend dem Oberbegriff aus Anspruch 1 ist erfindungsgemäß ein Wendeschaltsatz vorgesehen, der zwei Zahnradtriebe mit wenigstens vorzeichenmäßig unterschiedlicher Übersetzung umfaßt. Das Hohlrad ist mittels eines zweiten Wechsel- Schaltelementes wahlweise über einen ersten Zahnradtrieb oder einen zweiten Zahnradtrieb mit der An- bzw. Abtriebswelle der ersten Hydroeinheit koppelbar. Der erste Zahnradtrieb ist derart aufgebaut, daß bei Kopplung des Hohlrades mit der ersten Hydroeinheit über den ersten Zahnradtrieb Hohlrad und An- bzw. Abtriebswelle der ersten Hydroeinheit einen unterschiedlichen Drehsinn aufweisen. Der zweite Zahnradtrieb ist derart aufgebaut, daß bei einer Kopplung mit der ersten Hydroeinheit Hohlrad und An- bzw. Abtriebswelle der Hydroeinheit den gleichen Drehsinn aufweisen. Der Einsatz eines derartig aufgebauten Wendeschaltsatzes ermöglicht eine Drehrichtungsumkehr der ersten Hydroeinheit und die SHL-bedingten Strömungsumkehrungen können auf einfache Art und Weise mit geringem Aufwand realisiert werden.

Der in der Ausführung des Standes der Technik erforderliche aufwendige Steuerblock im Hochdruckbereich entfällt. Die hydrostatische Verkopplung der Hydroeinheiten erfolgt durch einen einfach gestalteten Verbindungsblock, der Mittel zur Einspeisung der Leckölmenge und zur Maximaldruckbegrenzung aufweist. Dieser Verbindungsblock zeichnet sich durch einen einfachen Aufbau, eine geringe Größe und eine einfache Kanalführung aus. Letztere bewirkt eine beträchtliche Reduzierung der Strömungsverluste gegenüber der im Stand der Technik angeführten Ausführung und damit eine wesentliche Verbesserung des Gesamtwirkungsgrades des Getriebes.

Die Erfindung ist anhand der Figuren näher erläutert. Darin ist im übrigen folgendes dargestellt:
- Fig. 1:: ein Ausführungsbeispiel des erfindungsgemäßen stufenlosen hydrostatischen Leistungsverzweigungsgetriebes mit integrierten Wendeschaltsatz im mechanischen Getriebeteil;
- Fig. 2: stufenloses hydrostatisches Leistungsverzweigungsgetriebe nach Figur 1 mit Angabe des Drehsinnes und der Arbeitsweise der einzelnen Hydroeinheiten und der Elemente des mechanischen Getriebeteiles im ersten Fahrbereich;
- Fig. 3: stufenloses hydrostatisches Leistungsverzweigungsgetriebe nach Figur 1 mit Angabe des Drehsinnes und der Arbeitsweise der einzelnen Hydroeinheiten und der Elemente des mechanischen Getriebeteiles im zweiten Fahrbereich;
- Fig. 4: stufenloses hydrostatisches Leistungsverzweigungsgetriebe nach Figur 1 mit Angabe des Drehsinnes und der Arbeitsweise der einzelnen Hydroeinheiten und der Elemente des mechanischen Getriebeteiles im dritten Fahrbereich;
- Fig. 5: stufenloses hydrostatisches Leistungsverzweigungsgetriebe nach Figur 1 mit Angabe des Drehsinnes und der Arbeitsweise der einzelnen Hydroeinheiten und der Elemente des mechanischen Getriebeteiles im Reversierbetrieb;
- Fig. 6: stufenloses hydrostatisches Leistungsverzweigungsgetriebe nach Figur 1 mit Angabe des Drehsinnes und der Arbeitsweise der einzelnen Hydroeinheiten und der Elemente des mechanischen Getriebeteiles im Bremsbetrieb.

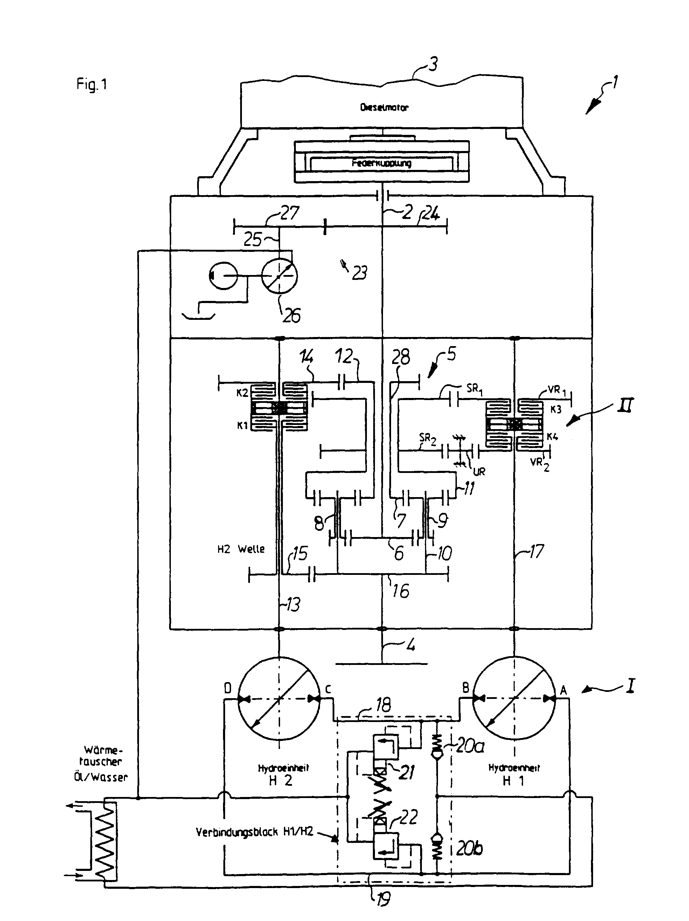

In Figur 1 ist ein Ausführungsbeispiel eines erfindungsgemäßen stufenlosen hydrostatischen Leistungsverzweigungsgetriebes dargestellt. Das in seiner Gesamtheit mit 1 bezeichnete Leistungsverzweigungsgetriebe besteht aus einem hydrostatischen Getriebeteil I, umfassend zwei als Pumpe und Motor betreibbare Hydroeinheiten H1 und H2, und einem mechanischen Getriebeteil II. Auf der Seite der Getriebeeingangswelle 2 eine Antriebsmaschine 3 angeschlossen. Eine Getriebeausgangswelle des Leistungsverzweigungsgetriebes 1 ist mit 4 bezeichnet. Zwischen die Getriebeeingangswelle 2 und die Getriebeausgangswelle 4 ist ein Planetendifferentialgetriebe 5, umfassend ein großes Sonnenrad 6, ein kleines Sonnenrad 7, Doppelplanetenräder 8 und 9, eine Stegwelle 10 und ein Hohlrad 11, geschaltet. Das große Sonnenrad 6 ist drehfest mit der Getriebeeingangswelle 2 verbunden. Das kleine Sonnenrad 7 ist drehfest mit einer Hohlwelle 28 verbunden, auf der wiederum drehfest ein Zahnrad 12 angeordnet ist. Das Zahnrad 12 kämmt mit einem drehbar auf einer Welle 13 angeordneten Zahnrad 14. Die Welle 13 stellt die mechanische Verbindung zwischen der Hydroeinheit 2 und dem Planetendifferentialgetriebe 5 her. Weiterhin ist auf der Welle 13 ein Zahnrad 15 drehbar angeordnet, das mit einem, drehfest mit der Getriebeausgangswelle 4 verbundenen Zahnrad 16 in Eingriff steht. Mit Hilfe einer Kupplung K1 kann das Zahnrad 15 mit der Welle 13 drehfest und mit einer Kupplung K2 das Zahnrad 14 mit der Welle 13 drehfest gekoppelt werden.

Ein Stirnrad SR₁ und ein Stirnrad SR₂ sind mit dem Hohlrad 11 drehfest verbunden. Das Stirnrad SR₁ kämmt mit einem Vorgelegerad VR₁ und das Stirnrad SR₂ über ein Umkehrrad UR mit einem Vorgelegerad VR₂. Beide Vorgelegeräder VR₁ und VR₂ sind mit den Schaltkupplungen K3 und K4 wahlweise mit einer Welle 17, die als An- bzw. Abtriebswelle der Hydroeinheit H1 fungiert, kuppelbar.

Die Hydroeinheiten H1 und H2 sind über die Verbindungsleitungen 18 und 19 miteinander verbunden. Die hydrostatische Verkopplung der Hydroeinheit H1 mit H2 erfolgt durch einen Verbindungsblock H1/H2, der zwei Rückschlagventile 20a und 20b zur Einspeisung der Leckölmenge und zwei Überdruckventile 21 und 22 zur Maximaldruckbegrenzung umfaßt.

Die Ölversorgung der Hydroeinheiten erfolgt durch eine von der Antriebsmaschine 3 über eine Stirnradstufe 23, umfassend ein mit der Getriebeiengangswelle drehfest verbundenes Stirnrad 24, welches mit einem, mit der Antriebswelle 25 einer Speisepumpe 26 drehfest verbundenen Stirnrad 27, im Eingriff steht, angetriebene Speisepumpe 26.

Die Drehzahl der Getriebeausgangswelle 4 summiert sich aus den Drehzahlen des großen Sonnenrades 6 und des Hohlrades 11, welche die Umlaufgeschwindigkeit der Planetenräder 8 und 9 bzw. der Stegwelle 10 festlegen.

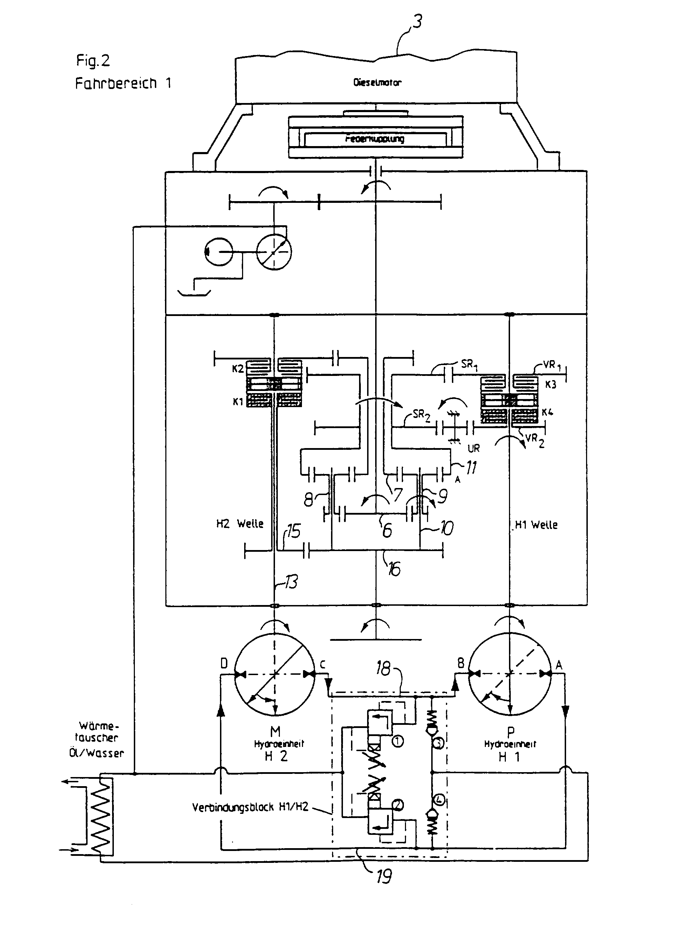

Figur 2 dient zur Verdeutlichung der Wirkungsweise des stufenlosen hydrostatischen Leistungsverzweigungsgetriebes aus Figur 1 im ersten Fahrbereich, d.h. im Anfahrbereich. Die Kupplungen K1 und K4 werden geschlossen. Der Kraftfluß erfolgt vom Antrieb 3 über das große Sonnenrad 6 auf die Doppelplanetenräder 8 und 9 über das Hohlrad 11 auf das Stirnrad SR₂, das Umkehrrad UR und auf das mit der Welle 17 durch die Kupplung K4 drehfest verbundene Vorgelegerad VR₂. Die Welle 17 fungiert als Antriebswelle der Hydroeinheit H1. Diese arbeitet im Anfahrbereich als Pumpe P und schwenkt bis auf maximalen Schwenkwinkel aus. Der Drehsinn von Hohlrad 11 und Sonnenrad 6 sind unterschiedlich.

Die von der als Pumpe P arbeitenden Hydroeinheit H1 aufgenommene Leistung wird unter Abzug der betriebsbedingten Verluste an die als Motor M betriebene Hydroeinheit H2 übertragen. Die Verbindungsleitung 19 ist dabei die Arbeitsleitung, während die Verbindungsleitung 18 als Niederdruckleitung fungiert. Die Hydroeinheit H2 treibt das über die Kupplung K1 mit der Verbindungswelle 13 drehfest verbundene Zahnrad 15, das wiederum mit dem mit der Getriebeausgangswelle drehfest verbundenen Zahnrad 16 in Eingriff steht, an.

Zu Beginn des Anfahrvorganges ist die als Motor M betriebene Hydroeinheit H2 auf maximales Verdrängungsvolumen eingestellt. Die Hydroeinheit H1 wird bis auf maximalen Schwenkwinkel ausgeschwenkt. Der Steg 10 steht still. Die Hydroeinheit H2 wird dann zurückgeschwenkt bis zur Nullage, d.h. die Hydroeinheit H2 nimmt kein Moment mehr auf, weshalb die Drehzahl der Antriebswelle der Hydroeinheit H1 ebenfalls allmählich auf Null zurückgeht. Am Ende des Anfahrbereiches beträgt die Drehzahl des Hohlrades deshalb angenähert Null. Kleines Sonnenrad 7 und Steg 10 weisen den gleichen Drehsinn auf. Die gesamte Leistung wird mechanisch übertragen. In diesem Punkt erfolgt Umschaltung in den zweiten Fahrbereich. Die Kupplung K1 wird geöffnet und die Kupplung K2 geschlossen. Da die Hydroeinheit H2 in Nullstellung kein Drehmomet aufnimmt, ist das Schaltmoment ca. 0 Nm. Anschließend erfolgt die Schaltung von K4 auf K3. Die Drehzahlen der beiden Kupplungen betragen angenähert null.

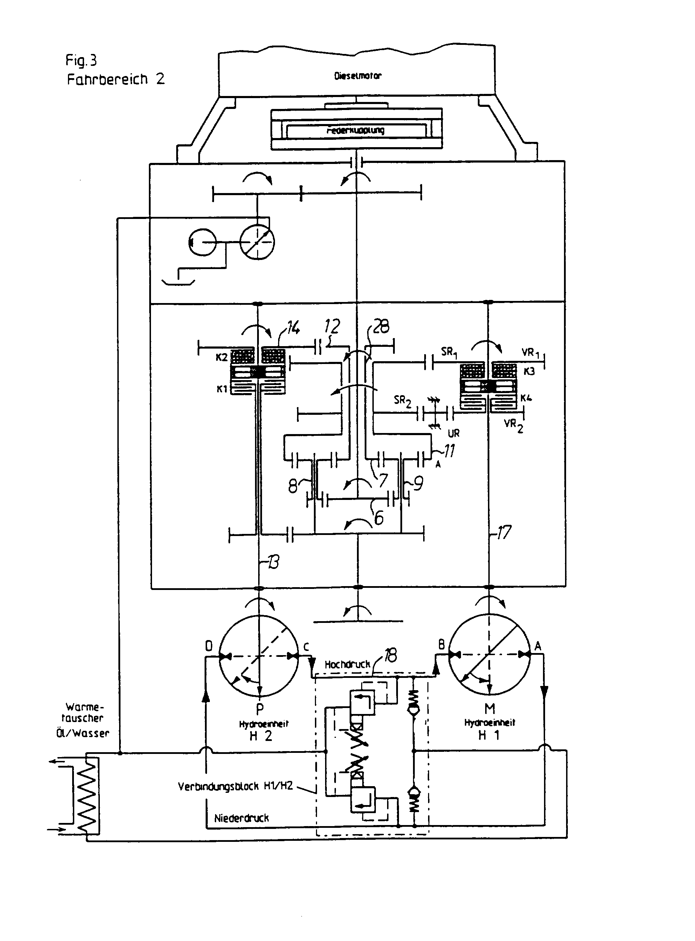

Figur 3 verdeutlicht den Drehsinn der einzelnen Elemente des in Figur 1 beschriebenen SHL-Getriebes im zweiten Fahrbereich. Die Kupplungen K2 und K3 sind geschlossen. Hydroeinheit H1 arbeitet als Motor M und Hydroeinheit H2 als Pumpe P; der Arbeitsleitung entspricht die Verbindungsleitung 18. Die Hydroeinheit H1 ist zu Beginn des zweiten Fahrbereiches immer noch auf maximalen Schwenkwinkel eingestellt, während der Schwenkwinkel der Hydroeinheit H2 Null beträgt.

Durch das Schließen der Kupplung K2 wird die Antriebswelle 13 der Hydroeinheit H2 drehfest mit dem Stirnrad 14 verbunden, das mit dem Stirnrad 12 im Eingriff steht, welches mit der gleichen Hohlwelle 28 wie das kleine Sonnenrad 7 drehfest verbunden ist. Der Antrieb des kleinen Sonnenrades 7 erfolgt über das große Sonnenrad 6 und die Doppelplanetenräder 8 und 9. Das Hohlrad 11 steht still. Kleines Sonnenrad 7 und großes Sonnenrad 6 weisen die gleiche Drehrichtung auf. Mit Vergrößerung des Schwenkwinkels der Hydroeinheit H2 nimmt der Anteil der hydraulisch zu übertragenden Leistung zu, die durch die Kopplung der Abtriebswelle 17 der Hydroeinheit H1 mit dem Hohlrad 11 über den Steg 10 auf die Getriebeausgangswelle 4 übertragen wird. Die Kopplung erfolgt durch das Schließen der Kupplung K3, was zu einer drehfesten Verbindung der Abtriebswelle 17 mit dem ersten Vorgelegerad VR₁ führt, welches mit dem ersten Stirnrad SR₁ in Eingriff steht, das wiederum mit dem Hohlrad 11 drehfet verbunden ist. Die Drehsinne von Hohlrad 11 und großem Sonnenrad 6 sowie kleinem Sonnenrad 7 stimmen bis zum Erreichen des maximalen Pumpenschwenkwinkels miteinander überein, demzufolge auch der Drehsinn des Steges 10.

Bei Erreichen des maximalen Schwenkwinkels der Hydroeinheit H2 wird die Hydroeinheit H1 zurückgeschwenkt. Der Anteil der hydraulischen übertragenen Leistung nimmt wieder ab, da die Hydroeinheit H1 mit Verkleinerung des Schwenkwinkels ein immer kleineres Moment aufnimmt. Demzufolge nimmt die Drehzahl der Hydroeinheit H2 bis zum Ende des zweiten Fahrbereiches bis auf Null ab. Die Drehzahl des kleinen Sonnenrades 7 verringert sich somit ebenfalls bis auf Null. In diesem Punkt erfolgt die Umschaltung in den dritten Fahrbereich. Die Kupplung K3 öffnet und die Kupplung K4 schließt.

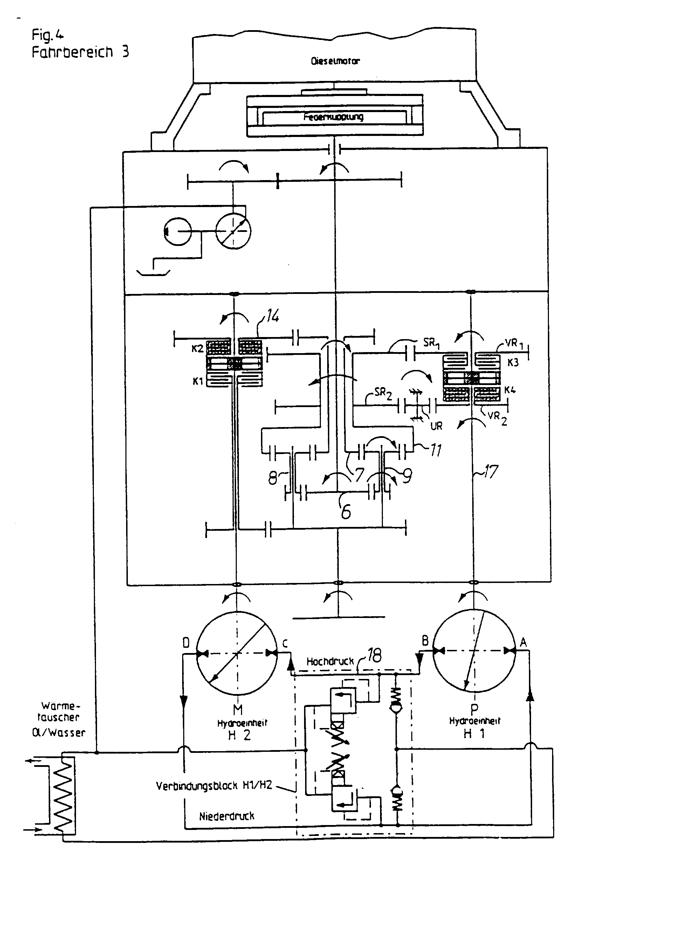

Figur 4 verdeutlicht die Wirkungsweise des stufenlosen hydrostatischen Leistungsverzweigungsgetriebes aus Figur 1 im dritten Fahrbereich. Die Funktion der Hydroeinheiten wird gegenüber dem zweiten Fahrbereich wieder vertauscht. Die Hydroeinheit H1 wird als Pumpe P im Rechtslauf und die Hydroeinheit H2 als Motor M betrieben. Die Hydroeinheit H2 bleibt ausgeschwenkt.

Die Hydroeinheit H1 wird über das große Sonnenrad 6, den Doppelplanetenträger 8 und 9, das Stirnrad SR₂, das Umkehrrad UR, Vorgelegerad VR₂ und die Welle 17 angetrieben. Die Hydroeinheit H1 wird von Null bis ca. 15 % ausgeschwenkt. Die von der als Pumpe P arbeitenden Hydroeinheit H1 aufgenommene Leistung wird unter Abzug der betriebsbedingten Verluste auf die als Motor M arbeitende Hydroeinheit H2 übertragen. Die Verbindungsleitung 18 fungiert dabei als Arbeits- bzw. Hochdruckleitung. Die Hydroeinheit H2, die auf maximales Verdrängervolumen eingestellt ist, nimmt ca. 26% der Antriebsleistung auf. Die Welle 13, die hier als Abtriebswelle der Hydroeinheit H2 fungiert, treibt über das mittels der Kupplung K2 mit ihr drehfest verbundene Stirnrad 14 und damit das kleine Sonnenrad 7 an. Das kleine Sonnenrad 7 und das Hohlrad 11 weisen unterschiedliche Drehrichtungen auf. Die Drehzahl der Getriebeausgangswelle 4 bestimmt sich dabei aus den Drehzahlunterschieden von kleinem Sonnenrad und Hohlrad 11.

Im dritten Fahrbereich ist die als Motor M betriebene Hydroeinheit H2 über den gesamten Fahrbereich voll ausgeschwenkt. Aufgrund der Zunahme des Schwenkwinkels der Hydroeinheit H1 vergrößert sich das übertragbare Moment der Hydroeinheit H1 auf die Hydroeinheit H2. Der Anteil der hydraulisch übertragenen Leistung nimmt in diesem Fahrbereich wieder zu.

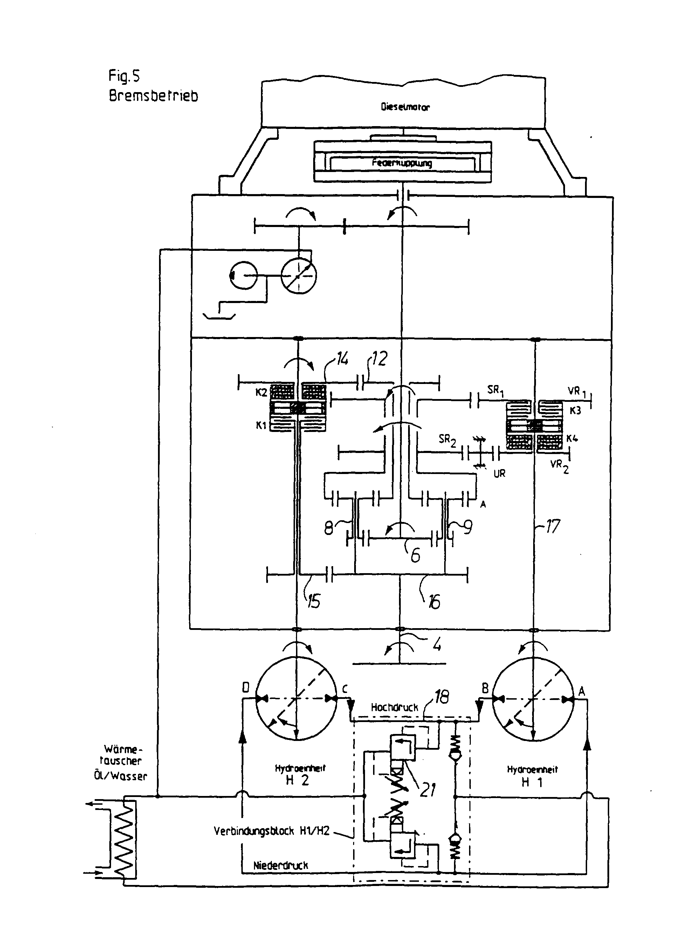

Figur 5 verdeutlicht die Wirkungsweise des SHL-Getriebes aus Figur 1 im Bremsbetrieb. Bei Betätigung des Bremspedals werden beide Hydrostatikeinheiten H1 und H2 derart geschwenkt, daß beide als Pumpe P betrieben werden und gegeneinander arbeiten. Dazu wird die Hydrostatikeinheit H1 aus der bisherigen Schwenklage zuerst in Richtung Nullstellung geschwenkt. H1 bleibt vorzugsweise ungefähr 5° ausgeschwenkt und schwenkt dann mit Voreilung auf maximalen Schwenkwinkel, und H2 mit Nacheilung auf 45% des maximalen Schwenkwinkels. Beide Hydroeinheiten arbeiten als Pumpe P in die selbe Leitung 18 (Hochdruckleitung), deren Überdruckventil 21 aufgrund der Überschreitung des eingestellten maximal zulässigen Drruckwertes öffnet und die Druckenergie in Wärme umsetzt.

Ein Aktivieren des Bremsbetriebes ist aus dem zweiten und dritten Fahrbereich möglich. Beide Hydrostatikeinheiten werden als Pumpe P geschalten. Die Ansteuerung Pumpenverstelleinrichtung erfolgt als Funktion des gewünschten Bremsmomentes, beispielsweise in Funktion des Bremspedalwinkels und der Dauer der Bremspedalbetätigung.

Die Kupplungen K2 und K4 sind geschalten und verbinden in diesem Fall die Antriebswelle 13 der Hydrostatikeinheit H2 über die Zahnradstufe 14/12, die über die Doppelplanetenräder 8 und 9 durch das drehfest mit der Getriebeeingangswelle 2 verbundene große Sonnenrad 6 angetrieben wird. Die Hydroeinheit H1 ist über die Welle 17 angetrieben.

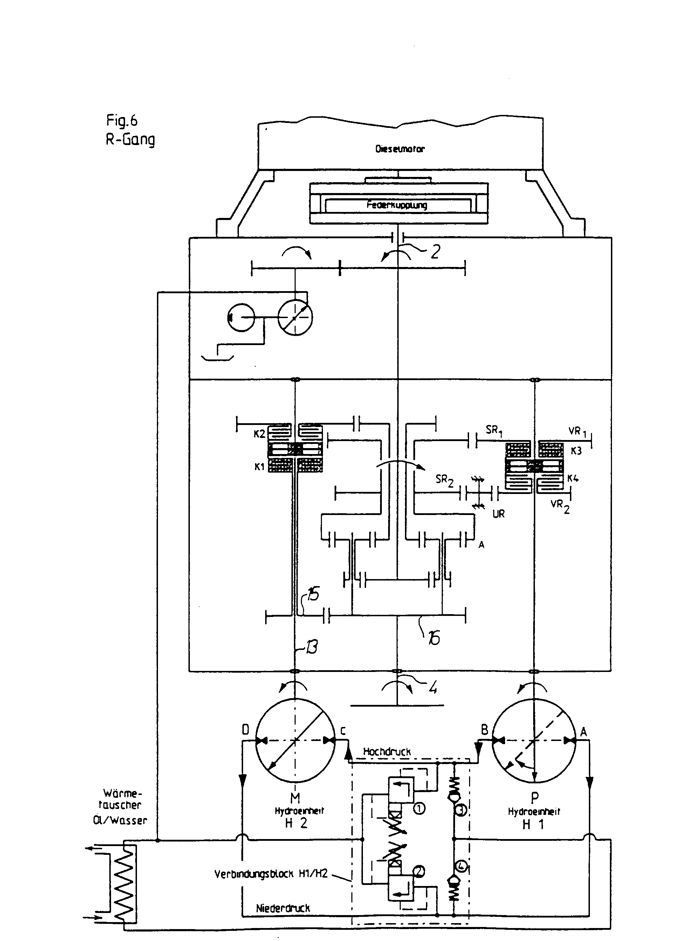

Figur 6 verdeutlicht die Arbeitsweise des SHL-Getriebes aus Figur 1 im Rückwärtsgang. Dazu sind die Kupplungen K1 und K3 geschlossen. Die Hydrostatikeinheit H1 wird als Pumpe P und die Hydrostatikeinheit H2 als Motor M betrieben. Die Abtriebswelle 13 der Hydroeinheit 2 treibt über die Zahnradstufe 15/16 die Getriebeausgangswelle 4 im Linkslauf an, d.h. im entgegengesetzten Drehsinn zur Getriebeeingangswelle 2.

Die Änderung des Schwenkwinkels der Hydroeinheiten und damit verbunden des Verdrängungsvolumens ist mechanisch, elektro-hydraulisch oder auch elektromechanisch möglich. Zur Festlegung des Zeitpunktes und der Größe der Schwenkwinkeländerungen werden Einrichtungen und Elemente der Steuer- und Regelungstechnik eingesetzt.

## Patentansprüche

1. Stufenloses hydrostatisches Leistungsverzweigungsgetriebe, mit mindestens zwei über Schaltelemente schaltbaren Betriebsbereichen;
1.1 mit einem ersten, mechanischen Teil (II), der ein Planetendifferentialgetriebe (5) umfaßt, welches mindestens zwei Sonnenräder (6, 7) unterschiedlichen Durchmessers, ein Hohlrad (11) und eine Stegwelle (10), auf der Doppelplanetenräder (8, 9) (drehfest verbundene Planetenräder) angeordnet sind, die mit den Sonnenrädern (6, 7) kämmen, aufweist, wobei das große Sonnenrad (6) mit der Getriebeeingangswelle (2) und die Stegwelle (10) mit der Getriebeausgangswelle (4) gekoppelt ist;
1.2 mit einem zweiten, hydrostatischen Teil (I), der zwei energetisch miteinander gekoppelte, in beiden Richtungen als Pumpe oder Motor betreibbare, verstellbare Hydroeinheiten (H1, H2) umfaßt, die mit dem mechanischen Teil (II) gekoppelt sind;
1.3 wobei in den einzelnen Betriebsbereichen das Hohlrad (11) zur Steuerung der Drehrichtung und der Drehzahl der Getriebeausgangswelle (4) mit einer ersten Hydroeinheit (H1) gekoppelt ist;
1.4 wobei im ersten Betriebsbereich die zweite Hydroeinheit (H2) über ein Wechsel-Schaltelement (K1/K2) mit der Getriebeausgangswelle (4) in Antriebsverbindung steht und die erste, mit dem Hohlrad (11) verbundene Hydroeinheit (H1) als Pumpe und die zweite Hydroeinheit (H2) als Motor arbeitet;
1.5 im ersten und zweiten Betriebsbereich durchlaufen die beiden Hydroeinheiten (H1, H2) jeweils gegensinnig zueinander ihren Stellbereich zwischen Minimal und Maximal, wobei sie beim Übergang vom ersten in den zweiten Betriebsbereich und umgekehrt jeweils ihre Funktion vertauschen;
gekennzeichnet durch die folgenden Merkmale:
1.6 das Hohlrad (11) ist mittels eines zweiten Wechsel- Schaltelementes (K3/K4) wahlweise über einen ersten Zahnradtrieb (SR₁/VR₁) oder einen zweiten Zahnradtrieb (SR₂/UR/VR₂) mit der der An- bzw. Abtriebswelle (17) der ersten Hydroeinheit (H1) koppelbar;
1.7 der erste Zahnradtrieb (SR₁/VR₁) ist derart aufgebaut, daß bei Kopplung des Hohlrades (11) mit der ersten Hydroeinheit (H1) über den ersten Zahnradtrieb (SR₁/VR₁) Hohlrad (11) und An- bzw. Abtriebswelle (17) der ersten Hydroeinheit (H1) einen unterschiedlichen Drehsinn aufweisen;
1.8 der zweite Zahnradtrieb (SR₂/UR/VR₂) ist derart aufgebaut, daß bei einer Kopplung mit der ersten Hydroeinheit (H1) Hohlrad (11) und An- bzw. Abtriebswelle (17) der Hydroeinheit (H1) den gleichen Drehsinn aufweisen.

2. Stufenloses hydrostatisches Leistungsverzweigungsgetriebe nach Anspruch 1, dadurch gekennzeichnet, daß der erste und der zweite Zahnradtrieb (SR₁/VR₁ und SR₂/UR/VR₂) derart aufgebaut sind, daß beide die gleiche Übersetzung aufweisen.

3. Stufenloses hydrostatisches Leistungsverzweigungsgetriebe nach einem der Ansprüche 1 oder 2, gekennzeichnet durch die folgenden Merkmale:
3.1 der erste Zahnradtrieb (SR₁/VR₁) umfaßt ein mit dem Hohlrad (11) drehfest verbundenes erstes Stirnrad (SR₁) und ein mit der An- bzw. Abtriebswelle (17) der ersten Hydroeinheit (H1) koppelbares erstes Vorgelegerad (VR₁), die miteinander kämmen;
3.2 der zweite Zahnradtrieb (SR₂/UR/VR₂) umfaßt ein mit dem Hohlrad (11) drehfest verbundenes zweites Stirnrad (SR₂), ein mit der An- bzw. Abtriebswelle (17) der ersten Hydroeinheit (H1) koppelbares zweites Vorgelegerad (VR₂) und ein Zwischenrad (UR), das das zweite Stirnrad (SR₂) mit dem zweiten Vorgelegerad (VR₂) verkoppelt.

4. Stufenloses hydrostatisches Leistungsverzweigungsgetriebe nach einem der Ansprüche 1 bis 3, dadurch gekennzeichnet, daß die hydrostatische Verkoppelung der beiden Hydroeinheiten (H1, H2) mittels eines Verbindungsblockes (H1/H2), umfassend zwei Rückschlagventile (20a, 20b) und zwei Druckbegrenzungsventile (21, 22), erfolgt.

## Claims

1. Continuously variable split-torque hydromechanical transmission having at least two operating regions selectable via gear elements;
1.1 with a first, mechanical portion (11), which comprises a planetary differential gear (5), having at least two sun gears (6, 7) of differing diameters, an internal gear (11) and a pin shaft (10), upon which there are arranged double planetary gears (8, 9) (rotation-fast connected planetary wheels), which mesh with the sun gears (6, 7), the large sun gear (6) being coupled with the transmission input shaft (2) and the pin shaft (10) being coupled with the transmission output shaft (4);
1.2 with a second, hydrostatic portion (I) which comprises two displaceable hydrostatic units (H1, H2), coupled together in an energy-transmitting manner, which are operable in both directions as pump or motor, and which are coupled with the mechanical portion (11);
1.3 wherein in the individual operating regions the internal gear (11) is coupled with a first hydrostatic unit (H1) to control the direction of rotation and the speed of the transmission output shaft (4);
1.4 wherein in the first operating region the second hydrostatic unit (H2) is drive connected via a change-over element (K1/K2) to the transmission output shaft (4), and the first hydrostatic unit (H1) connected to the internal gear (11) operates as a pump and the second hydrostatic unit (H2) operates as a motor;
1.5 both hydrostatic units (H1, H2), in the first and second operating regions respectively, run in contrary directions to one another through their adjustment range between minimum and maximum, wherein they respectively exchange their functions during the transition from the first into the second operating region and vice versa;
characterised by the following features:
1.6 the internal gear (11) can be coupled by means of a second change-over element (K3/K4) optionally via a first gear drive (SR₁/VR₁) or a second gear drive (SR₂/UR/VR₂) with the input or output shaft (17) of the first hydrostatic unit (H1);
1.7 the first gear drive (SR₁/VR₁) is so constructed that, when the internal gear (11) is coupled with the first hydrostatic unit (H1) via the first gear drive (SR₁/VR₁), the internal gear (11) and the input or output shaft (17) of the first hydrostatic unit (H1) have differing directions of rotation;
1.8 the second gear drive (SR₂/UR/VR₂) is so constructed that, when coupled to the first hydrostatic unit (H1), the intemal gear (11) and input or output shaft (17) of the hydrostatic unit (H1) have the same direction of rotation.

2. Continuously variable split-torque hydromechanical transmission according to claim 1, characterised in that the first and the second gear drives (SR₁/VR₁ and SR₂/UR/VR₂) are so constructed that both have the same transmission ratio.

3. Continuously variable split-torque hydromechanical transmission according to one of claims 1 or 2, characterised by the following features:
3.1 the first gear drive (SR₁/VR₁) comprises a first spur gear (SR₁) connected rotation-fast to the internal gear (11), and a first layshaft gear (VR₁) which can be coupled to the input or output shaft (17) of the first hydrostatic unit (H1), which mesh with one another;
3.2 the second gear drive (SR₂/UR/VR₂) comprises a second spur gear (SR₂) connected rotation-fast to the internal gear (11), a second layshaft gear (VR₂) which can be coupled with the input or output shaft (17) of the first hydrostatic unit (H1), and an intermediate gear (UR), which couples the second spur gear (SR₂) with the second layshaft gear (VR₂).

4. Continuously variable split-torque hydromechanical transmission according to one of claims 1 to 3, characterised in that the hydrostatic coupling of both hydrostatic units (H1, H2) is effected by means of a connector block (H1/H2), comprising two non-return valves (20a, 20b) and two pressure limiting valves (21, 22).

## Revendications

1. Transmission hydrostatique continue à division de puissance, avec au moins deux allures que l'on peut enclencher au moyen d'éléments d'enclenchement, transmission comprenant :
1.1 une première partie mécanique (II), qui se compose d'une boîte à engrenages différentiels planétaires (5), qui présente au moins deux roues solaires (6, 7) de diamètre différent, une roue (11) à denture intérieure et un arbre transversal (10), sur lequel sont disposées des roues planétaires doubles (8, 9) (roues planétaires reliées de façon solidaire en rotation), qui engrènent avec les roues solaires (6, 7), la grande roue solaire (6) étant couplée avec l'arbre d'entrée de la transmission (2) et l'arbre transversal (10) avec l'arbre de sortie de la transmission (4).
1.2 Une seconde partie hydrostatique (I), qui se compose de deux unités hydrauliques (H1, H2) réglables, couplées l'une à l'autre du point de vue énergétique, pouvant fonctionner dans les deux sens en pompe ou en moteur, unités hydrauliques (H1, H2) qui sont couplées avec la partie mécanique (II),
1.3 la roue (11) à denture intérieure étant couplée, aux différentes allures, pour commander le sens de rotation et la vitesse de rotation de l'arbre de sortie (4) de la transmission à une première unité hydraulique (H1),
1.4 la seconde unité hydraulique (H2) étant en liaison d'entraînement, à la première allure, au moyen d'un élément de changement de vitesse (K1/K2) avec l'arbre de sortie de la transmission (4) et la première unité hydraulique (H1), reliée à la roue à denture intérieure (11) fonctionnant en pompe et la deuxième unité hydraulique (H2) fonctionnant en moteur,
1.5 les deux unités hydrauliques (H1, H2) parcourant à la première et à la seconde allure respectivement en sens contraire l'une de l'autre leur zone de réglage entre la position minimale et la position maximale, en permutant lors du passage de la première allure à la seconde allure et inversement respectivement leurs fonctions,
caractérisée en ce que
1.6 la roue (11) à denture intérieure peut être couplée au moyen d'un second élément de changement d'allure et d'enclenchement (K3/K4) à volonté au moyen d'un premier engrenage (SR₁/UR/VR₂) avec l'arbre d'entrée ou de sortie (17) de la première unité hydraulique (H1),
1.7 le premier engrenage (SR₁/VR₁) est construit d'une manière telle que lors de l'accouplement de la roue (11) à denture intérieure avec la première unité hydraulique (H1) au moyen du premier engrenage (SR₁.VR₁) la roue (11) à denture intérieure et l'arbre d'entrée ou de sortie (17) de la première unité hydraulique (H1) présentent un sens de rotation différent,
1.8 le second engrenage (SR₂/UR/VR₂) est construit d'une manière telle que lors d'un accouplement avec la première unité hydraulique (H1) la roue (11) à denture intérieure et l'arbre d'entrée ou de sortie (17) de l'unité hydraulique (H1) présentent le même sens de rotation.

2. Transmission hydrostatique continue à division de puissance selon la revendication 1,
caractérisée en ce que
le premier et le second engrenage (SR₁/VR₁ et SR₂/UR/VR₂) sont construits d'une manière telle que les deux présentent la même démultiplication.

3. Transmission hydrostatique continue à division de puissance selon l'une des revendications 1 ou 2,
caractérisée par
les particularités suivantes :
3.1 le premier engrenage (SR₁/VR₁) comprend une première roue droite (SR₁) reliée de façon solidaire en rotation à la roue (11) à denture intérieure et une première roue de renvoi (VR₁) qui peut être accouplée à l'arbre d'entrée ou de sortie (17) de la première unité hydraulique (Hl) roue droite (SR₁) et roue de renvoi (VR₁) qui engrènent l'une avec l'autre.
3.2 Le second engrenage (SR₂/UR/VR₂) comprend une seconde roue droite (SR₂) reliée de façon solidaire en rotation avec la roue (11) à denture intérieure, une seconde roue de renvoi (VR₂) qui peut être couplée à l'arbre d'entrée ou de sortie (17) de la première unité hydraulique (H1) et une roue intermédiaire (UR) qui accouple la seconde roue droite (SR₂) avec la seconde roue de renvoi (VR₂.

4. Transmission hydrostatique continue à division de puissance selon l'une des revendications 1 à 3,
caractérisée en ce que
le couplage hydrostatique des deux unités hydrauliques (H1, H2) a lieu au moyen d'un bloc de liaison (H1/H2), comprenant deux clapets anti retour (20a, 20b) et deux soupapes de limitation de pression (21, 22).
